# EUROPÄISCHE PATENTSCHRIFT

(11) **EP 2 212 221 B1**
(45) Veröffentlichungstag und Bekanntmachung des Hinweises auf die Patenterteilung: **24.08.2011**
(21) Anmeldenummer: 08851148.0
(22) Anmeldetag: 18.11.2008
(51) Int. Cl.: B65G 15/28, B65G 15/60, B65G 39/09

(54) **ANTRIEB VON FÖRDERMITTELN ODER GEFÖRDERTEN GEGENSTÄNDEN**
DRIVE FOR CONVEYOR MEANS OR CONVEYED OBJECTS
ENTRAÎNEMENT DE MOYENS DE TRANSPORT OU D'OBJETS TRANSPORTÉS

(30) Priorität: 20.11.2007 CH 17912007
(43) Veröffentlichungstag der Anmeldung: 04.08.2010
(73) Patentinhaber: WRH Walter Reist Holding AG, 8272 Ermatingen (CH)
(72) Erfinder: MÜLLER, Erwin, 8635 Dürnten (CH)
(74) Vertreter: Frei Patent Attorneys
(86) Internationale Anmeldenummer: PCT/CH2008/000489
(87) Internationale Veröffentlichungsnummer: WO 2009/065243

(56) Entgegenhaltungen:
- WO-A-2005/113391
- US-A- 2 984 522

## Beschreibung

Die Erfindung bezieht sich auf das Gebiet der Fördertechnik, insbesondere auf einen Antrieb von Fördermitteln oder von geförderten Gegenständen gemäss dem Oberbegriff des Patentanspruches 1.

### STAND DER TECHNIK

Es ist bekannt, Förderbänder und andere Fördersysteme durch Zahnräder oder Ketten anzutreiben. Solche Antriebe erfordern eine Umlenkung entlang eines Kreisbogens (Räder), und/oder sind mit hohen Reibungsverlusten behaftet (Ketten).

### DARSTELLUNG DER ERFINDUNG

Es ist deshalb Aufgabe der Erfindung, einen Antrieb von Fördermitteln oder von geförderten Gegenständen der eingangs genannten Art zu schaffen, welcher die oben genannten Nachteile behebt.

Diese Aufgabe löst ein Antrieb von Fördermitteln oder von geförderten Gegenständen mit den Merkmalen des Patentanspruches 1.

Der Antrieb weist also eine Antriebseinheit auf, wobei die Antriebseinheit einen Zentralkörper, ein Antriebsmittel und ein um den Zentralkörper umlaufendes Abtriebsmittel aufweist. Das Antriebsmittel dient zum Einspeisen von Antriebskräften in die Antriebseinheit. Das Abtriebsmittel dient zum Übertragen von Kräften an zu fördernde Gegenstände oder an ein Fördermittel. Fördermittel oder zu fördernde Gegenstände sind in einem Abtriebsbereich der Antriebseinheit durch das Abtriebsmittel entlang einer Förderbahn förderbar. Das Abtriebsmittel ist mittels eines in einer Umlaufbahn um den Zentralkörper umlaufenden Rollenkörpers bezüglich des Zentralkörpers gelagert. Dabei rollt das Abtriebsmittel über Rollen des Rollenkörpers am Zentralkörper ab und gibt so der Rollenkörper radiale Druckkräfte an den Zentralkörper weiter. Das Abtriebsmittel ist direkt durch das Antriebsmittel angetrieben. Der Rollenkörper selber ist nicht direkt durch das Antriebsmittel angetrieben, sondern wird nur durch das Abrollen des Abtriebsmittels am Rollenkörper mitbewegt (also mit der halben Geschwindigkeit des Abtriebsmittels).

Die geförderten Gegenstände sind beispielsweise in der Förderbahn gefördertes Stückgut oder flache Gegenstände, insbesondere Druckereiprodukte; vereinzelt oder in einem Schuppenstrom. Werden nicht die Gegenstände selber angetrieben, so greift das Abtriebsmittel an Elementen eines Förderystemes an, welche wiederum die geförderten Gegenstände transportieren.

Dadurch wird es möglich - im Gegensatz zu Umlenkrollen oder Umlenkräder, welche nur eine Umlenkung über Kreisbogenabschnitte zulassen - die geförderten Gegenstände entlang von (in gewissen Grenzen) frei gestaltbaren Kurven zu führen und anzutreiben. Der Zentralkörper und eine Umlaufbahn des Rollenkörpers, wie auch eine Lauffläche des Zentralkörpers, auf welcher der Rollenkörper abrollt, können also einen freien Verlauf, insbesondere einen nicht kreisförmigen Verlauf aufweisen. Der Verlauf ist im wesentlichen nur dadurch eingeschränkt, dass ein minimaler Krümmungsradius stets gewährleistet sein muss, und dass die Torsion des Rollenkörpers begrenzt ist. Verläuft die Umlaufbahn entlang einer Ebene (wie in den beiliegenden Figuren), so tritt keine Torsion des Rollenkörpers auf. Der Rollenkörper gewährleistet eine geringe Reibung auch bei hohen Normalkräften, bei gleichzeitig einfacher Konstruktion: Der Druck zwischen Abtriebsmittels und Zentralkörper wird durch die abrollenden Rollen übertragen, ohne dass eine Lagerung der Achsen der Rollen wesentlich belastet wird. Diese Lagerung dient lediglich dazu, die Rollen voneinander zu beabstanden und ihr Herausfallen im unbelasteten Zustand zu verhindern. Der direkte Antrieb des Abtriebsmittels ergibt eine effiziente Kraftübertragung.

In einer bevorzugten Ausführungsform der Erfindung weist der Rollenkörper eine Mehrzahl von linear miteinander verbundenen Rollen auf, wobei die Rollen durch einen flexiblen und insbesondere auch elastischen Verbindungskörper miteinander verbunden und voneinander beabstandet sind. Der Verbindungskörper bildet also einen beweglichen Lagerkäfig, auch Käfigband genannt. Dabei ist das Käfigband in einer bevorzugten Ausführungsform der Erfindung in mindestens zwei Richtungen biegbar. Dazu weist der Verbindungskörper vorzugsweise Haltebereiche auf, in welche die Rollen eingesetzt sind, und Gelenkbereiche, welche die Haltebereiche flexibel miteinander verbinden.

In einer bevorzugten Ausführungsform der Erfindung ist der Verbindungskörper einstückig, z.B. aus einem Kunststoff oder Gewebe geformt und sind die Rollen direkt oder über einen Lagerkörper oder Rollenring in den Verbindungskörper eingesetzt.

In einer anderen bevorzugten Ausführungsform der Erfindung sind die Rollen einstückig und walzenförmig, und sind an den Innenseiten der Haltebereiche jeweils einander gegenüberliegende Lagerstellen geformt. An den Rollen sind insbesondere mit der Form der Lagerstellen korrespondierende, hervorstehende Achselemente geformt. Die Rollen sind mittels der Achselemente in die Lagerstellen eingesetzt. Der Begriff walzenförmig umfasst insbesondere die Form eines Kreiszylinders oder eines tonnenförmigen, ausgebauchten Zylinders oder eines eingebuchteten Zylinders. Die Rollen sind vorzugsweise einstückig und aus Metall oder Kunststoff geformt.

Für weitere Ausführungsformen von Rollenkörpern und deren Rollen und Verbindungskörper (z.B. kugelförmige Rollen, die in einem Lagerkörper in einem flachen Band eingeschnappt sind) wird auf die WO 2006/094423 verwiesen, deren Inhalt hiermit durch Verweis in die vorliegende Anmeldung aufgenommen wird.

Vorzugsweise ist die Antriebseinheit in Leichtbauweise ausgeführt, mit Rollen aus beispielsweise Kunststoff und dem Zentralkörper aus Kunststoff oder Aluminium. Die Rollen können für höhere Belastungen grundsätzlich auch als Vollzylinder oder aus Hülsen aus Aluminium oder aus Stahl(blech) gefertigt sein. Damit wird ein leichtlaufendes System mit geringer Massenträgheit und mit geringen Energieverlusten geschaffen. Da keine nennenswerten Reibkräfte auftreten - Druckkräfte werden durch die Rollen ohne Reibung an einer Achse übertragen - kann die Antriebseinheit ohne Schmiermittel betrieben werden und ist dadurch weniger anfällig auf Verschmutzung.

In einer bevorzugten Ausführungsform der Erfindung ist das Abtriebsmittel ein umlaufender Riemen. Vorzugsweise ist der Riemen auf der Innenseite, also auf der dem Rollenkörper zugewandten Seite, in Laufrichtung gesehen glatt, und weist auf der Aussenseite Zähne oder Nocken auf. Der Riemen kann auf der Aussenseite ebenfalls glatt sein, oder durch einzelne Seile, beispielsweise aus Gummi oder einem Kunststoff, ersetzt sein. Die Bezeichnung "Glatt in Laufrichtung" schliesst nicht aus, dass der Riemen auf der Innenseite Vorsprünge oder Nuten aufweisen kann, welche parallel zur Laufrichtung verlaufen. In diesem Fall sind in den Rollen korrespondierend geformte Nuten oder Vorsprünge ausgebildet, so dass der Riemen dadurch seitlich geführt ist.

Vorzugsweise verlaufen der Rollenkörper und das Abtriebsmittel an mindestens einem Bereich, ihrer Umlaufbahn, vorzugsweise in einem Antriebsbereich, voneinander beabstandet. Sie sind also in radialer Richtung, d.h. senkrecht zur Lauffläche der Umlaufbahn, voneinander beabstandet. Dadurch kann dieser Bereich als Ausgleichsbereich wirken, um herstellungsbedingte oder temperaturbedingte Schwankungen der Länge von Abtriebsmittel und Rollenkörper auszugleichen.

In einer bevorzugten Ausführungsform der Erfindung weist die Umlaufbahn - und damit auch der Verlauf des Rollenkörpers und des Abtriebsmittels - mindestens einen konkaven Abschnitt auf. Einerseits kann das Antriebsmittel in einem konkaven Antriebsbereich der Umlaufbahn an das Abtriebsmittel angreifen, wobei das Antriebsmittel vorzugsweise ein Rad ist, und das Abtriebsmittel das Antriebsmittel in dem Antriebsbereich teilweise umschlingt. Andererseits kann das Abtriebsmittel auch in einem Abtriebsbereich einen konkaven Abschnitt aufweisen.

In einer weiteren bevorzugten Ausführungsform der Erfindung ist das Abtriebsmittel in radialer Richtung sowohl nach innen durch mindestens einen inneren Rollenkörper als auch nach aussen durch mindestens einen äusseren Rollenkörper abgestützt. Der äussere Rollenkörper läuft also an der Aussenseite des Abtriebsmittels umlaufend mit. Dadurch wird auch in konkaven Abschnitten das Abtriebsmittel mit geringer Reibung gelagert.

in einer weiteren bevorzugten Ausführungsform der Erfindung ist der Antriebseinheit eine Gegeneinheit zugeordnet, welche der Antriebseinheit im Abtriebsbereich bezüglich der Förderbahn gegenüberliegt und deren Form im Bereich des Abtriebsbereichs mit der Form des Abtriebsbereichs korrespondiert und so einen Abschnitt der Förderbahn definiert. Ein konkaver Bereich des Abtriebsbereichs entspricht also einem konvexen Bereich der Gegeneinheit und umgekehrt. Die Antriebseinheit und die Gegeneinheit können federnd gegeneinander gelagert sein, um Variationen in der Dicke des Fördergutes zu kompensieren.

Die Gegeneinheit kann ebenfalls eine Antriebseinheit sein, oder analog zu einer Antriebseinheit aber ohne Antriebsmittel aufgebaut sein. Die Gegeneinheit kann aber auch eine Führung mit fixen Rollen, oder lediglich eine Gleitschiene sein.

In einer weiteren bevorzugten Ausführungsform der Erfindung sind die Umlaufbahn und damit auch der Rollenkörper an einzelnen Abschnitten der Umlaufbahn tordiert oder verwunden. Damit ist eine Umlenkung der geförderten Gegenstände entlang einer dreidimensional (also nicht nur in einer Ebene) verlaufenden Trajektorie möglich.

In einer anderen bevorzugten Ausführungsform der Erfindung ist die Antriebseinheit selber beweglich und bewegt sich aufgrund der vom Antriebsmittel eingespeisten Kräfte bezüglich eines ortsfesten Körpers.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine perspektivische Ansicht einer Antriebseinheit;
- Figur 2: einen Querschnitt durch eine Antriebseinheit;
- Figur 3: einen Querschnitt durch eine Umlaufbahn;
- Figur 4: einen Querschnitt durch eine Umlaufbahn in einer anderen Ausführungsform der Erfindung; und
- Figur 5: einen Rollenkörper.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

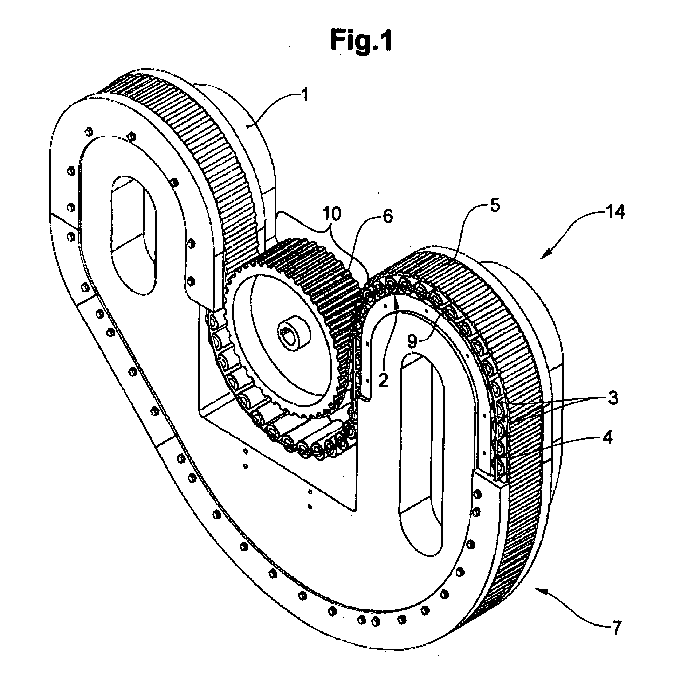

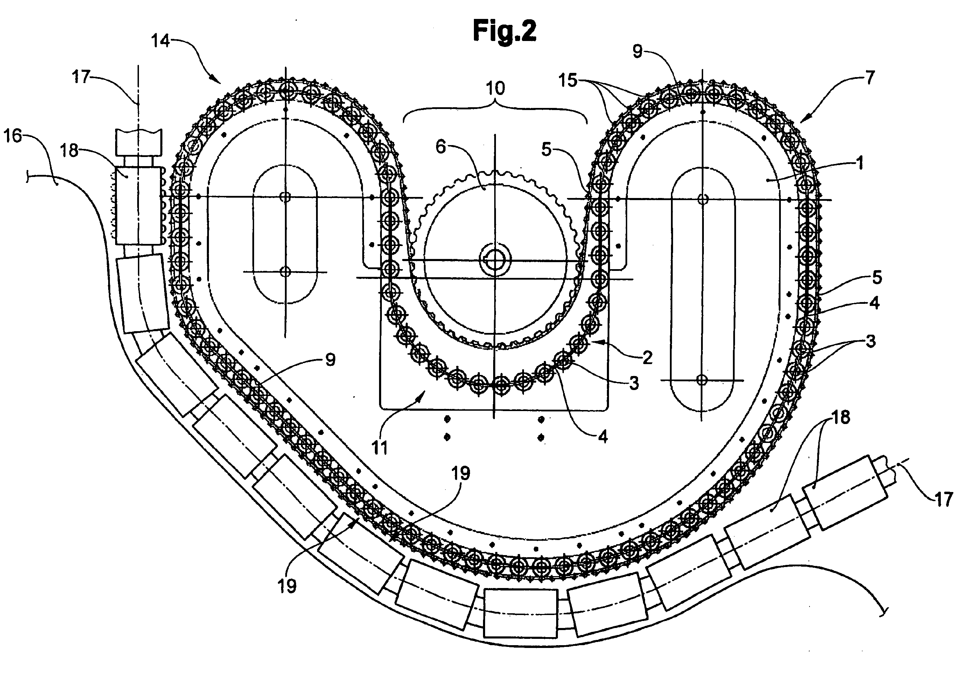

**Figur 1** zeigt eine perspektivische Ansicht einer Antriebseinheit 14, und Figur 2 einen Querschnitt durch eine Antriebseinheit 14. Die Antriebseinheit 14 weist einen Zentralkörper 1 auf, mit einem in einer Umlaufbahn 7 umlaufenden Rollenkörper 2. Der Rollenkörper 2 weist ein flexibles Käfigband 4 mit darin gelagerten Rollen 3 auf. Die Rollen 3 rollen an einer Lauffläche 9 der Umlaufbahn 7 ab. Auf dem Rollenkörper 2 ist ein Zahnriemen 5 abrollend gelagert. Der Zahnriemen 5 wirkt als Abtriebselement zum Antreiben von weiteren, hier nicht gezeichneten Gegenständen. Der Zahnriemen kann auch - anders als hier gezeichnet - als Nockenriemen ausgebildet sein, d.h. mit voneinander stärker beabstandeten Nocken 15, beispielsweise entsprechend einer Taktdistanz von zu fördernden Gegenständen.

Der Zahnriemen 5 wird durch ein Antriebsrad 6, vorzugsweise ein Zahnrad oder Zahnritzel, angetrieben. Der Zahnriemen 5 umschlingt das Antriebsrad 6 in einem Antriebsbereich 10 der Antriebseinheit 14. Dazu sind die Umlaufbahn 7 und der Verlauf von Zahnriemen 5 und Rollenkörper 2 im Antriebsbereich 10 konkav ausgebildet. Zudem verlaufen in diesem Bereich der Zahnriemen 5 und der Rollenkörper 2 von einander (in radialer Richtung) beabstandet. Dadurch ergibt sich ein Ausgleichsbereich 11, in welchem Längenunterschiede zwischen Zahnriemen 5 und Rollenkörper 2 ausgeglichen werden. Das Antriebsrad 6 wird durch einen nicht eingezeichneten Antrieb angetrieben. Das Antriebsrad 6 kann bezüglich des Zentralkörpers 1 in radialer Richtung beweglich gelagert sein, mit einer Feder oder arretierbar. Dadurch ist der Zahnriemen 5 durch Bewegen des Antriebsrades 6 gegen den Zentralkörper 1 hin spannbar.

In der **Figur 2** sind zusätzlich zur Antriebseinheit 14 noch schematisch eingezeichnet: eine Gegeneinheit 16 und dazwischen angeordnete geförderte Gegenstände (Fördergut) oder Elemente 18 eines Fördersystems. Die Elemente 18 bilden beispielsweise eine Folge von aneinander stossenden oder miteinander verketteten Teilen. Die Form der Gegeneinheit 16 ist in einem Abtriebsbereich 19 der Form der Antriebseinheit 14 folgend ausgebildet. Der Zwischenraum zwischen Antriebseinheit 14 und Gegeneinheit 16 definiert so einen Verlauf einer Förderbahn 17. Die Gegeneinheit 16 kann beispielsweise sein:
- eine Schiene;
- ein bewegtes Band;
- eine Antriebseinheit 14 wie bisher beschrieben;
- eine Umlenkeinheit, entsprechend im wesentlichen einer Antriebseinheit 14 aber ohne Antriebsrad; oder
- eine Umlenkeinheit, entsprechend im wesentlichen einer Antriebseinheit 14 mit einem nicht angetriebenen, frei mitlaufenden Rad an der Stelle des Antriebsrades. Dieses mitlaufende Rad spannt den Zahnriemen 5.

In eventuellen konkaven Bereichen der Antriebseinheit 14 (nicht gezeichnet) hält die Gegeneinheit 16 über das Fördergut 18 den Rollenkörper 2 und den Zahnriemen 5 gegen den Zentralkörper 1. Die Förderelemente 18 können auch einseitig oder beidseitig eine Verzahnung aufweisen, die mit der Verzahnung des Zahnriemens 5 korrespondiert.

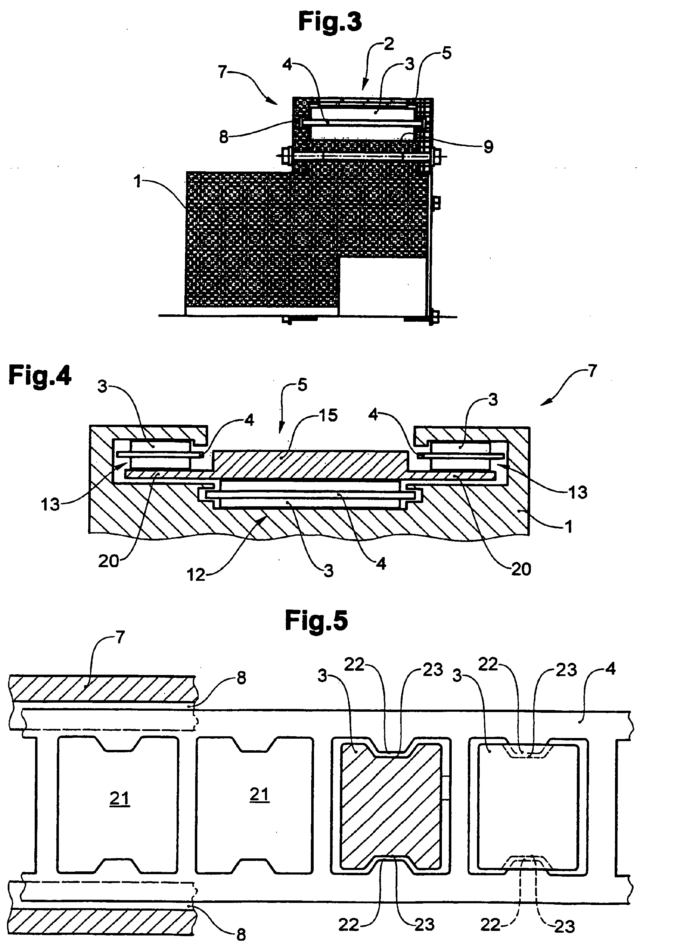

**Figur 3** zeigt einen Querschnitt durch eine Umlaufbahn. Das Käfigband 4 ist in seitlichen Nuten 8 in der Umlaufbahn 7 lose geführt. Dadurch wird das Käfigband 4 in Situationen, in denen es nicht schon durch den Zahnriemen 5 in die Umlaufbahn 7 gezogen wird, vor dem Verlassen der Umlaufbahn 7 in radialer Richtung geschützt. Die Umlaufbahn 7 führt den Rollenkörper 2 und vorzugsweise auch den Zahnriemen 5 in seitlicher Richtung, also senkrecht zur Bewegungsrichtung und senkrecht zur Lauffläche 9.

**Figur 4** zeigt einen Querschnitt durch eine Umlaufbahn in einer anderen Ausführungsform der Erfindung. Hier ist der Zahnriemen 5 durch einen inneren Rollenkörper 12 und einen äusseren Rollenkörper 13 abrollend gelagert. Diese beiden Rollenkörper sind analog zum bisher beschriebenen Rollenkörper 2 aufgebaut. Die Funktion des inneren Rollenkörpers 12 ist dieselbe wie diejenige des bisher beschriebenen. Der äussere Rollenkörper 13 bewirkt eine abrollende Lagerung des Zahnriemens 5 in konkaven Bereichen der Umlaufbahn 7. Dazu ist der äussere Rollenkörper 13 vorzugsweise zweiteilig aufgebaut, mit jeweils einem Teil in einem Seitenbereich 20 des Zahnriemens 5.

**Figur 5** zeigt einen Rollenkörper, mit einer Aufsicht auf einen Abschnitt eines Käfigbandes oder Rollenbandes 4, mit teilweise eingesetzten Rollen 3, und mit einem Teil der Umlaufbahn 7. Das Rollenband 4 weist aufeinander folgende Ausnehmungen 21 auf, wobei jede Ausnehmung 21 bei beiden Seiten des Bandes jeweils einen nach innen weisenden Lagervorsprung 22 aufweist. Die Rollen 3 sind an ihren axialen Enden mit Einbuchtungen 23 versehen, so dass die Lagervorsprünge 22 des flexiblen Rollenbandes 4 in die Einbuchtungen 23 einschnappen oder eingeführt werden können. Das Rollenband 4 ist einerseits derart flexibel, dass es zum Umfahren des Zentralkörpers 1 gebogen werden kann, und andererseits stabil oder steif genug, dass die Rollen 3 nach dem Einsetzen in die Ausnehmungen 21 durch die Lagervorsprünge 22 gehalten sind. Die Lagervorsprünge 22 nehmen in der Regel nur das Eigengewicht der Rollen 3 auf.

### BEZUGSZEICHENLISTE

- 1: Zentralkörper
- 2: Rollenkörper
- 3: Rolle
- 4: Käfigband
- 5: Zahnriemen
- 6: Antriebsrad, Zahnrad, Zahnritzel
- 7: Umlaufbahn
- 8: Nut
- 9: Lauffläche
- 10: Antriebsbereich
- 11: Ausgleichsbereich
- 12: innerer Rollenkörper
- 13: äusserer Rollenkörper
- 14: Antriebseinheit
- 15: Zahn, Nocke
- 16: Gegenhalter
- 17: Förderbahn
- 18: Fördergut, Fördermittel
- 19: Abtriebsbereich
- 20: Seitenbereich
- 21: Ausnehmungen
- 22: Lagervorsprünge
- 23: Einbuchtungen

## Patentansprüche

1. Antrieb von Fördermitteln oder von geförderten Gegenständen, aufweisend eine Antriebseinheit (14), wobei die Antriebseinheit (14) aufweist einen Zentralkörper (1), ein Antriebsmittel (6) und ein um den Zentralkörper (1) umlaufendes Abtriebsmittel (5) wobei Fördermittel oder zu fördernde Gegenstände in einem Abtriebsbereich (19) der Antriebseinheit (14) durch das Abtriebsmittels (5) entlang einer Förderbahn (17) förderbar sind,
**dadurch gekennzeichnet, dass** das Abtriebsmittel (5) mittels eines in einer Umlaufbahn (7) um den Zentralkörper (1) umlaufenden Rollenkörpers (2) bezüglich des Zentralkörpers (1) gelagert ist, wobei das Abtriebsmittel (5) über Rollen (3) des Rollenkörpers (2) am Zentralkörper (1) abrollt und so der Rollenkörper (2) radiale Druckkräfte an den Zentralkörper (1) weitergibt, wobei das Abtriebsmittel (5) direkt durch das Antriebsmittel (6) angetrieben ist, und der Rollenkörper (2) selber nicht direkt durch das Antriebsmittel (6) angetrieben ist, sondern nur durch das Abrollen des Abtriebsmittels (5) am Rollenkörper (2) mitbewegt wird.

2. Antrieb gemäss Anspruch 1, wobei der Rollenkörper (2) einen umlaufenden flexiblen Verbindungskörper (4) mit darin gehaltenen Rollen (3) aufweist.

3. Antrieb gemäss Anspruch 1 oder 2, wobei das Abtriebsmittel (5) ein umlaufender Riemen ist.

4. Antrieb gemäss Anspruch 3, wobei der Riemen (5) auf der Innenseite, also auf der dem Rollenkörper (2) zugewandten Seite, in Laufrichtung glatt ist.

5. Antrieb gemäss Anspruch 3 oder 4 wobei der Riemen (5) auf der Aussenseite Zähne oder Nocken (15) aufweist.

6. Antrieb gemäss einem der bisherigen Ansprüche, wobei der Rollenkörper (2) und das Abtriebsmittel (5) an mindestens einem Bereich, ihrer Umlaufbahn (7), vorzugsweise in einem Antriebsbereich (10), voneinander beabstandet verlaufen.

7. Antrieb gemäss einem der bisherigen Ansprüche, wobei die Umlaufbahn (7) einen freien Verlauf, insbesondere einen nicht kreisförmigen Verlauf aufweist.

8. Antrieb gemäss einem der bisherigen Ansprüche, wobei die Umlaufbahn (7) mindestens einen konkaven Abschnitt aufweist.

9. Antrieb gemäss Anspruch 8, wobei das Antriebsmittel (6) in einem konkaven Antriebsbereich (10) der Umlaufbahn (7) an das Abtriebsmittel (5) angreift.

10. Antrieb gemäss Anspruch 9, wobei das Antriebsmittel (6) ein Rad ist, und das Abtriebsmittel (5) das Antriebsmittel (6) in dem Antriebsbereich (10) teilweise umschlingt.

11. Antrieb gemäss einem der Ansprüche 7 bis 10, wobei das Abtriebsmittel (5) in einem Abtriebsbereich (19) einen konkaven Abschnitt aufweist.

12. Antrieb gemäss einem der bisherigen Ansprüche, wobei das Abtriebsmittel (5) in radialer Richtung sowohl nach innen durch mindestens einen inneren Rollenkörper (12) als auch nach aussen durch mindestens einen äusseren Rollenkörper (13) abgestützt ist.

13. Antrieb gemäss einem der bisherigen Ansprüche, wobei der Antriebseinheit (14) eine Gegeneinheit (16) zugeordnet ist, welche der Antriebseinheit (14) im Abtriebsbereich (19) bezüglich der Förderbahn (17) gegenüberliegt und deren Form im Bereich des Abtriebsbereichs (19) mit der Form des Abtriebsbereichs (19) korrespondiert und so einen Abschnitt der Förderbahn (17) definiert.

14. Antrieb gemäss Anspruch 13, wobei die Gegeneinheit (16) ebenfalls eine Antriebseinheit (14) ist, oder analog zu einer Antriebseinheit (14) aber ohne ein angetriebenes Antriebsmittel aufgebaut ist.

## Claims

1. A drive for conveyor means or for conveyed objects, comprising a drive unit (14), wherein the drive unit (14) comprises a central body (1), a drive means (6) and a driven means (5) circulating around the central body (1) enabling the conveyor means or the objects to be conveyed to be conveyed in a driving section (19) of the drive unit (14) along a conveyor path (17) by way of the driven means (5), **characterized in that** the driven means (5) is mounted with respect to the central body (1) by means of a roller body (2) which circulates around the central body (1) in an orbital track (7), wherein the driven means (5) rolls along the central body (1) over rollers (3) of the roller body (2) and thus the roller body (2) transmits radial pressure force to the central body (1), wherein the driven means (5) is driven directly by the drive means (6), and the roller body (2) itself is not driven directly by the drive means (6), but rather is only moved via the rolling of the driven means (5) on the roller body (2).

2. The drive according to claim 1, wherein the roller body (2) comprises a circulating flexible connecting body (4), with rollers (3) held therein.

3. The drive according to claim 1 or 2, wherein the driven means (5) is a circulating belt.

4. The drive according to claim 3, wherein the inner side of belt (5), that is the side facing the roller body (2), is smooth with respect to the direction of travel.

5. The drive according to claim 3 or 4 where in the belt (5) comprises teeth or cam lobes (15) on the outer side.

6. The drive according to any one of the preceding claims, wherein the roller body (2) and the driven means (5) run at some distance apart from one another for at least one section of their orbital track (7), preferably in a drive section (10).

7. The drive according to any one of the preceding claims, wherein the orbital track (7) comprises an arbitrary course, in particular a non-circular course.

8. The drive according to any one of the preceding claims, wherein the orbital track (7) comprises at least one concave segment.

9. The drive according to claim 8, wherein the drive means (6) engages the driven means (5) in a concave drive section (10) of the orbital track (7).

10. The drive according to claim 9, wherein the drive means (6) is a wheel and the driven means (5) partly wraps around the drive means (6) in the drive section (10).

11. The drive according to one of the claims 7 to 10, wherein the driven means (5) comprises a concave segment in a driving section (19).

12. The drive according to any one of the preceding claims, wherein the driven means (5), as well as being supported in the radial direction from the inner side by at least one inner roller body (12), is also supported in the radial direction from the outer side by at least one outer roller body (13).

13. The drive according to any one of the preceding claims, wherein the drive unit (14) is associated with a counter unit (16), which lies opposite the drive unit (14) with respect to the conveyor path (17) in the driving section (19), and whose shape corresponds to the shape of the driving section (19) in the region of the driving section (19) and thus defines a section of the conveyor path (17).

14. The drive according to claim 13, wherein the counter unit (16) is also a drive unit (14), or is designed in a manner analogous to a drive unit (14), but without a driven drive means.

## Revendications

1. Entraînement de moyens de transport ou d'objets transportés, présentant une unité d'entraînement (14), l'unité d'entraînement (14) présentant un corps central (1), un moyen d'entraînement (6) et un moyen entraîné (5) qui entoure le corps central (1),
des moyens de transport ou des objets à transporter pouvant être transportés le long d'une piste de transport (17) par le moyen entraîné (5) dans une partie entraînante (19) de l'unité d'entraînement (14), **caractérisé en ce que**
le moyen entraîné (5) est monté par rapport au corps central (1) au moyen d'un corps de roulement (2) qui entoure le corps central (1) dans une piste (7) en boucle fermée,
**en ce que** le moyen entraîné (5) roule sur le corps central (1) par l'intermédiaire de galets (3) du corps de roulement (2), le corps de roulement (2) transmettant ainsi au corps central (1) des forces de poussée radiale,
**en ce que** le moyen entraîné (5) est entraîné directement par le moyen d'entraînement (6) et
**en ce que** le corps de roulement (2) n'est pas entraîné par le moyen d'entraînement (6) et n'est déplacé que par le roulement du moyen entraîné (5) sur le corps de roulement (2).

2. Entraînement selon la revendication 1, dans lequel le corps de roulement (2) présente un corps flexible périphérique de liaison (4) dans lequel sont maintenus des galets (3).

3. Entraînement selon les revendications 1 ou 2, dans lequel le moyen entraîné (5) est une courroie en boucle fermée.

4. Entraînement selon la revendication 3, dans lequel le côté intérieur, c'est-à-dire le côté tourné vers le corps de roulement (2), de la courroie (5), est lisse dans la direction d'avancement.

5. Entraînement selon les revendications 3 ou 4, dans lequel la courroie (5) présente des dents ou cames (15) sur son côté extérieur.

6. Entraînement selon l'une des revendications précédentes, dans lequel le corps de roulement (2) et le moyen entraîné (5) s'étendent à distance l'un de l'autre en au moins une partie de leur piste (7) en boucle fermée, de préférence dans une zone d'entraînement (10).

7. Entraînement selon l'une des revendications précédentes, dans lequel la piste (7) en circuit fermé présente une forme libre et en particulier une forme non circulaire.

8. Entraînement selon l'une des revendications précédentes, dans lequel la piste (7) en boucle fermée présente au moins une partie concave.

9. Entraînement selon la revendication 8, dans lequel le moyen d'entraînement (6) engage le moyen entraîné (5) dans une zone concave d'entraînement (10) de la piste (7) en boucle fermée.

10. Entraînement selon la revendication 9, dans lequel le moyen d'entraînement (6) est une roue et dans lequel le moyen entraîné (5) entoure au moins une partie du moyen d'entraînement (6) dans la zone d'entraînement (10).

11. Entraînement selon l'une des revendications 7 à 10, dans lequel le moyen entraîné (5) présente une partie concave dans une partie entraînante (19).

12. Entraînement selon l'une des revendications précédentes, dans lequel le moyen entraîné (5) est soutenu dans la direction radiale à la fois vers l'intérieur par au moins un corps intérieur de roulement (12) et par l'extérieur par au moins un corps extérieur de roulement (13).

13. Entraînement selon l'une des revendications précédentes, dans lequel une unité complémentaire (16) qui est située face à l'unité d'entraînement (14) dans la partie entraînante (19) par rapport à la piste de transport (17) et dont la forme correspond dans la partie entraînante (19)) à la forme de la partie entraînante (19) pour ainsi définir une partie de la piste de transport (17) est associée à l'unité d'entraînement (14).

14. Entraînement selon la revendication 13, dans lequel l'unité complémentaire (16) est également une unité d'entraînement (14), ou est de structure analogue à une unité d'entraînement (14) mais sans moyen d'entraînement entraîné.
